# EUROPEAN PATENT SPECIFICATION

(11) **EP 1 441 409 B1**
(45) Date of publication and mention of the grant of the patent: **13.04.2011**
(21) Application number: 04075112.5
(22) Date of filing: 16.01.2004
(51) Int. Cl.: H01M 8/10, H01M 8/02, H01M 4/88

(54) **New configuration and lithium polymer battery design**
Neue Konfiguration und Litium Polymer Batterie Aufbau
Nouvelle configuration et conception de pile au lithium

(30) Priority: 22.01.2003 US 348749
(43) Date of publication of application: 28.07.2004
(73) Proprietor: EnerDel, Inc., Indianapolis, IN 46256 (US)
(72) Inventor: Parsian, Mohammad, Swartz Creek, MI 48473 (US)
(74) Representative: McDonough, Jonathan

(56) References cited:
- JP-A- 05 129 025
- US-A- 4 916 036
- US-A- 5 498 489
- BAUDRY P ET AL: "Lithium polymer battery development for electric vehicle application" JOURNAL OF POWER SOURCES, ELSEVIER SEQUOIA S.A. LAUSANNE, CH, vol. 68, no. 2, 1 October 1997 (1997-10-01), pages 432-435, XP004102043 ISSN: 0378-7753
- GAUTHIER M ET AL: "Large lithium polymer battery development The immobile solvent concept" JOURNAL OF POWER SOURCES, ELSEVIER SEQUOIA S.A. LAUSANNE, CH, vol. 54, no. 1, 1 March 1995 (1995-03-01), pages 163-169, XP004044530 ISSN: 0378-7753
- MOORE S W SCHNEIDER P J: "A review of cell equalization methods for lithium ion and lithium polymer battery systems" SAE WORLD CONGRESS, XX, XX, 5 March 2001 (2001-03-05), pages 1-5, XP002954937
- LETOURNEAU C ET AL: "Progress in lithium polymer battery development for telecommunication system" TELECOMMUNICATIONS ENERGY CONFERENCE, 1998. INTELEC. TWENTIETH INTERNATIONAL SAN FRANCISCO, CA, USA 4-8 OCT. 1998, PISCATAWAY, NJ, USA,IEEE, US, 4 October 1998 (1998-10-04), pages 656-662, XP010350575 ISBN: 0-7803-5069-3

## Description

### Technical Field

This invention relates to a method of preparation of lithium cells, in particular lithium ion and lithium ion polymer batteries.

### Background of the Invention

Lithium ion cells and batteries are secondary (i.e., rechargeable) energy storage devices well known in the art. The lithium ion cell, known also as a rocking chair type lithium ion battery, typically comprises essentially a carbonaceous anode (negative electrode) that is capable of intercalating lithium ions, a lithium-retentive cathode (positive electrode) that is also capable of intercalating lithium ions, and a non-aqueous, lithium ion conducting electrolyte therebetween.

The carbon anode comprises any of the various types of carbon (e.g., graphite, coke, carbon fiber, etc.) which are capable of reversibly storing lithium species, and which are bonded to an electrochemically conductive current collector (e.g. copper foil, grid, or mesh) by means of a suitable organic binder (e.g., polyvinylidene fluoride, PVdF).

The cathode comprises such materials as transition metal chalcogenides that are bonded to an electrochemically conductive current collector (e.g., aluminum foil, grid, or mesh) by a suitable organic binder. Chalcogenide compounds include oxides, sulfides, selenides, and tellurides of such metals as vanadium, titanium, chromium, copper, molybdenum, niobium, iron, nickel, cobalt and manganese. Lithiated transition metal oxides are at present the preferred positive electrode intercalation compounds. Examples of suitable cathode materials include LiMnO₂ LiCoO₂ LiNiO₂ and LiFePO4 their solid solutions and/or their combination with other metal oxides and dopant elements, e.g., titanium, magnesium, aluminum, boron, etc.

The electrolyte in such lithium ion cells comprises a lithium salt dissolved in a non-aqueous solvent which may be (1) completely liquid, (2) an immobilized liquid (e.g., gelled or entrapped in a polymer matrix), or (3) a pure polymer. Known polymer matrices for entrapping the electrolyte include polyacrylates, polyurethanes, polydialkylsiloxanes, polymethacrylates, polyphosphazenes, polyethers, polyvinylidene fluoride, polyolefins such as polypropylene and polyethylene, and polycarbonates, and may be polymerized in situ in the presence of the electrolyte to trap the electrolyte therein as the polymerization occurs. Known polymers for pure polymer electrolyte systems include polyethylene oxide (PEO), polymethylene-polyethylene oxide (MPEO), or polyphosphazenes (PPE). Known lithium salts for this purpose include, for example, LiPF₆, LiClO₄, LiSCN, LiAlCl₄, LiBF₄, LiN(CF₃SO₂)₂, LiCF₃SO₃, LiC(SO₂CF₃)₃, LiO₃SCF₂CF₃, LiC₆F₅SO₃, LiO₂CF₃, LiAsF₆, and LiSbF₆. Known organic solvents for the lithium salts include, for example, alkylcarbonates (e.g., propylene carbonate, ethylene carbonate), dialkyl carbonates, cyclic ethers, cyclic esters, glymes, lactones, formates, esters, sulfones, nitrites, and oxazolidinones. The electrolyte is incorporated into pores in a separator layer between the cathode and anode. The separator may be glass mat, for example, containing a small percentage of a polymeric material, or may be any other suitable ceramic or ceramic/polymer material. Silica is a typical main component of the separator layer.

During processing of the cell precursor, a large quantity of a homogeneously distributed plasticizer is present in the solid polymeric matrix in order to create porosity. For example, the plasticizer may be propylene carbonate, phthalic acid diesters, adipic acid diesters, acetic acid esters, organic phosphates, and/or trimellitic acid triesters. These plasticizers must be removed before the cell is activated with an electrolyte because, if mixed with the electrolyte, the plasticizers can damage the cell. The plasticizers are generally removed by extracting them into a solvent, such as diethyl ether or hexane, which selectively extract the plasticizer without significantly affecting the polymer matrix. This produces a "dry" electrolytic cell precursor, in that the precursor does not contain any electrolyte solvent or salt. An electrolyte solvent and electrolyte salt solution is then imbibed into the "dry" electrolytic cell copolymer membrane structure to yield a functional electrolytic cell system. The ion-conducting electrolyte provides ion transfer from one electrode to the other, and commonly permeates the porous structure of each of the electrodes and the separator.

Lithium and lithium ion polymer cells are often made by adhering, e.g., by laminating, thin films of the anode, cathode and/or electrolyte/separator together. Each of these components is individually prepared, for example, by coating, extruding, or otherwise, from compositions including one or more binder materials and a plasticizer. The electrolyte/separator is adhered to an electrode (anode or cathode) to form a subassembly, or is adheringly sandwiched between the anode and cathode layers to form an individual cell or unicell. A second electrolyte/separator and a second corresponding electrode may be adhered to form a bicell of, sequentially, a first counter electrode, a film separator, a central electrode, a film separator, and a second counter electrode. A number of cells are adhered and bundled together to form a high energy/voltage battery or multicell.

In constructing a lithium-ion cell, an anodic current collector may be positioned adjacent a single anode film, or sandwiched between two separate anode films, to form the negative electrode. Similarly, a cathodic current collector may be positioned adjacent a single cathode film, or sandwiched between two separate cathode films, to form the positive electrode. A separator is positioned between the negative electrode and the positive electrode. The anode, separator, and cathode structures are then adhered together (e.g., by laminating) to produce a unitary flexible electrolytic cell precursor.

Depending upon the cell, physical manipulations may be problematic. For example, a cell having a plurality of layers may be bulky, may not bundle tightly, and/or may not bundle uniformly. As a result, the cell may not have the desired physical and performance properties. There is thus a need for methods to enhance processing and performance efficiency that will provide advantages, such as improved productivity and decreased costs.

Lithium polymer batteries comprising opposite electrodes, a separator and an electrolyte are known from the documents J. Power Sources 54, 163 (1995) and 68, 432 (1997), as well as the documents SAE World Congress 1 (2001) and Telekomm. Energy Conf. 656 (1998). US 4,916,036 discloses a continuous anode for a lithium cell and US 5,498,489 discloses a stacked rechargeable lithium battery assembly with a laminated polymer electrolyte configuration. JP-05129025 A describes the manufacture of a cell for a solid polymer electrolytic fuel cell including sintered powder slurries of electrode material to form a fuel cell having a thin electrode film.

### Summary of the Invention

The present invention provides a lithium polymer battery comprising at least one cell, said cell comprising a first electrode, a second electrode of opposite charge from the first electrode, and a separator between the first and second electrodes, the first electrode configured continuously and the second electrode configured discontinuously. The cell may be configured as a multicell or a multibicell. The battery may contain a current collector for at least one of the electrodes, either on an outer or inner surface of an electrode, or between layers or films of electrodes having the same charge.

The present invention also provides a lithium polymer battery comprising at least one cell with a first electrode, a second electrode of opposite charge from the first electrode, and a separator between the first and second electrodes, the battery in a corrugated configuration. In the corrugated configuration the first electrode is in the interior of a folded cell and is configured discontinuously, and the second electrode is the exterior electrode of a folded cell and is configured continuously. The battery may also comprise a current collector for at least one of the electrodes. The current collector may be on an outer surface of the exterior electrode and configured continuously, or it may be on an outer surface of the inner electrode and configured discontinuously, or it may be between layers or films of electrodes having the same charge.

The present invention also provides a method for preparing a lithium polymer cell. The method comprises (a) providing a first electrode configured continuously, second electrodes configured discontinuously, and a separator between the first and second electrodes, and (b) adhering the separator to the first and second electrodes to form a cell, such as a multicell or a multibicell. The method may further include folding the cell at the junctures of the discontinuous electrodes with the discontinuous electrodes on the interior of the cell. The method may also comprise repeating steps (a) and (b) to form a plurality of cells and adhering the plurality of cells to form a battery, and folding the battery at the junctures of the discontinuous electrodes with the discontinuous electrodes on the interior of the battery. The cells may be adhered in a single process, and the process may be controlled by a thermal management system.

There is thus provided a lithium cell that provides enhanced processing and performance efficiency, and a method of manufacturing the cell with greater productivity and decreased costs.

### Brief Description of the Drawings

The present invention will now be described, by way of example, with reference to the accompanying drawings, in which:
Figure 1 is a diagrammatic illustration of a front view of one embodiment of a cell having one anode and multiple cathodes.
Figure 2 is a diagrammatic illustration of a top view of the embodiment of the cell shown in Figure 1.
Figure 3A is a diagrammatic top view of the folded cell shown in Figure 1.
Figure 3B is a perspective view of the folded cell shown in Figure 1. Figure 4 is a diagrammatic illustration of an alternative embodiment of a cell having one cathode and multiple anodes.
Figure 5 is a diagrammatic illustration of a top view of the embodiment of the cell shown in Figure 4.
Figure 6A is a diagrammatic top view of the folded cell shown in Figure 4.
Figure 6B is a perspective view of the folded cell shown in Figure 4.
Figure 7 is a diagrammatic illustration of a front view of one embodiment of a cell having one cathode and multiple anodes.
Figure 8 is a diagrammatic illustration of a top view of the embodiment of the cell shown in Figure 7.
Figure 9A is a diagrammatic top view of the folded cell shown in Figure 7.
Figure 9B is a perspective view of the folded cell shown in Figure 7.
Figure 10 is a diagrammatic illustration of a front view of an alternative embodiment of a cell having one anode and multiple cathodes.
Figure 11 is a diagrammatic illustration of a top view of the embodiment of the cell shown in Figure 10.
Figure 12A is a diagrammatic top view of the folded cell shown in Figure 10.
Figure 12B is a perspective view of the folded cell shown in Figure 10.
Figure 13 is a diagrammatic illustration of a front view of one embodiment of a cell with an outside current collector and having one anode and multiple cathodes.
Figure 14 is a diagrammatic illustration of a top view of the embodiment of the cell shown in Figure 13.
Figure 15A is a diagrammatic top view of the folded cell shown in Figure 13.
Figure 15B is a perspective view of the folded cell shown in Figure 13.
Figure 16 is a diagrammatic illustration of a front view of an alternative embodiment of a cell with an outside current collector and having one cathode and multiple anodes.
Figure 17 is a diagrammatic illustration of a top view of the embodiment of the cell shown in Figure 16.
Figure 18A is a diagrammatic top view of the folded cell shown in Figure 16.
Figure 18B is a perspective view of the folded cell shown in Figure 16.
Figure 19 is a diagrammatic illustration of a front view of one embodiment of a cell with an outside current collector and having one cathode and multiple anodes.
Figure 20 is a diagrammatic illustration of a top view of the embodiment of the cell shown in Figure 19.
Figure 21A is a diagrammatic top view of the folded cell shown in Figure 19.
Figure 21B is a perspective view of the folded cell shown in Figure 19.
Figure 22 is a diagrammatic illustration of a front view of one embodiment of a cell with an outside current collector and having one anode and multiple cathodes.
Figure 23 is a diagrammatic illustration of an alternative embodiment of the cell shown in Figure 22.
Figure 24A is a diagrammatic top view of the folded cell shown in Figure 22.
Figure 24B is a perspective view of the folded cell shown in Figure 22.

### Detailed Description

An electrode cell has two opposite electrodes, an anode (negative electrode) and cathode (positive electrode), with a separator between them. Each electrode (the anode and/or the cathode) may be comprised of two or more layers that are separated by a current collector. For example, an anode may be comprised of two negative electrode layers separated by a negative current collector, and/or the cathode may be comprised of two positive electrode layers separated by a positive current collector. The plane of the current collector is generally parallel to the plane of the polymer matrix film portion of the electrode. Similarly, the plane of separator films is generally parallel to the plane of the electrodes.

The electrodes and separator are adhered to form a cell. As known to one skilled in the art, adherence may be by laminating using pressure (manual and/or mechanical), heat, or a combination of pressure and heat. When the components are adhered or laminated, there is a series of generally planar laminated elements. The number of layers may make cell configurations difficult, particularly in relation to achieving a desired configuration. As used herein, cell configurations refer to the result of physical manipulations of the adhered layers that are performed to achieve a compact functional cell, and include folding, rolling, shaping, etc. The battery may be shaped into folds of parallel and alternating ridges and grooves, with a resulting corrugated structure. Positive and negative terminals, also referred to as tabs, are used to establish or break the electrical connection of the cell.

Various designs are contemplated to configure a cell in which one electrode is continuous, while the other electrode is discontinuous. More specifically, the electrode that will be the outermost electrode of the final cell, either the anode or the cathode, is configured as continuous. The opposite electrode is configured as discontinuous. For example, a cell designed with a discontinuous inner negative electrode will have a continuous outer positive electrode, and a cell designed with a discontinuous inner positive electrode will have a continuous outer negative electrode. As used herein, discontinuous is defined as an anode or cathode in which the charge of that electrode, either positive or negative, is carried by a plurality of joined electrodes or multiple joined electrodes, rather than by a single electrode. Thus, as used herein, multiple electrodes refer to discontinuous electrodes or components, and a single electrode refers to a continuous electrode.

The number of discontinuous electrodes or components, making up the inner electrode, depends upon the parameters desired in the resulting cell (e.g., size, power, efficiency), as determined by one skilled in the art. The inventive cell configurations, and methods for producing these cell configurations, allow for increased flexibility in battery design. The cell configurations can be used to produce a battery of any size or capacity, for example, a multibicell battery, a multicell battery, a battery having multiple modules that each have multiple multicells or multibicells, etc.

The inventive cell configurations, and method for preparing the cell configurations, provide several desirable features. They allow uniformity in the structure and performance of multicell batteries. The batteries thus configured have continuous adherence of the middle as well as the external or final cell electrodes (both multicell and multibicell). This advantageously results in improved cell capacity, life cycle, and power. The normal loss of the first charge/discharge cycle of the cell is also reduced or eliminated, because the inventive design improves uniformity of battery charge and discharge. Impedence of every individual cell or bicell is equal, with the same voltage and same capacity.

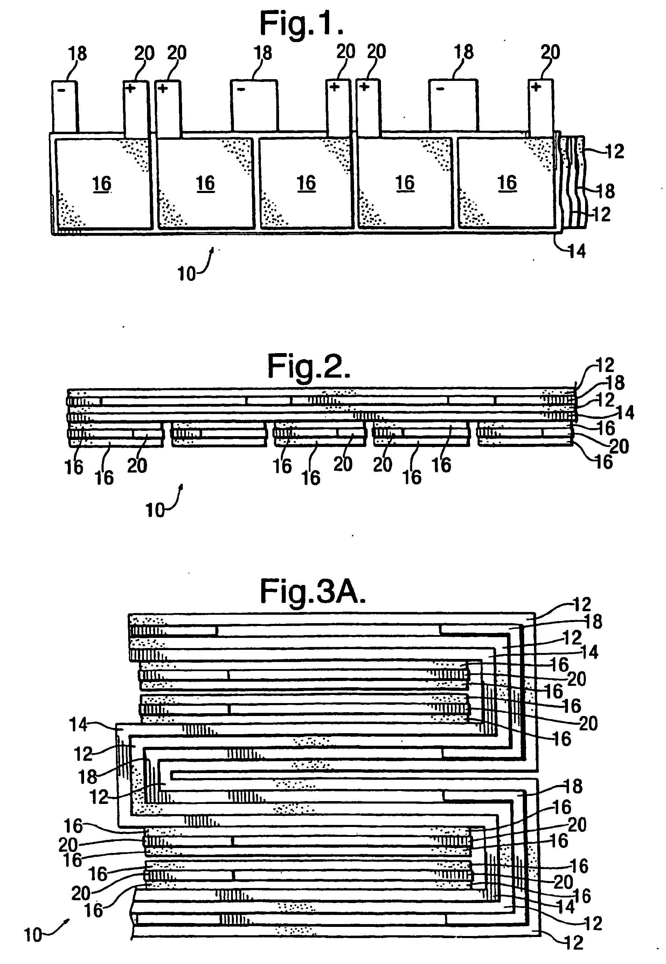

One embodiment of the invention, shown in Figures 1, 2, 3A and 3B, is a multicell 10 design having a single anode 12 (negative electrode) configured as the exterior of the folded cell 10, a separator 14, and multiple cathodes 16 (positive electrodes) configured in the interior or inner surface of the cell 10. That is, a separator 14 separates a single anode 12 from multiple cathodes 16. Figure 1 shows a front view, and Figure 2 shows a top view of such a multicell 10. While Figure 1 illustrates a multicell having five components of the cathode (five unicells), multicells with two, three, or four components of the cathode may be used, as well as multicells with greater than five components of the cathode, as previously described. Negative current collectors 18 are positioned in the anode 12 thereby splitting the anode 12 into two layers, as shown, and positive current collectors 20 are positioned in each of the multiple cathodes 16 thereby splitting each cathode 16 into two layers, as shown.

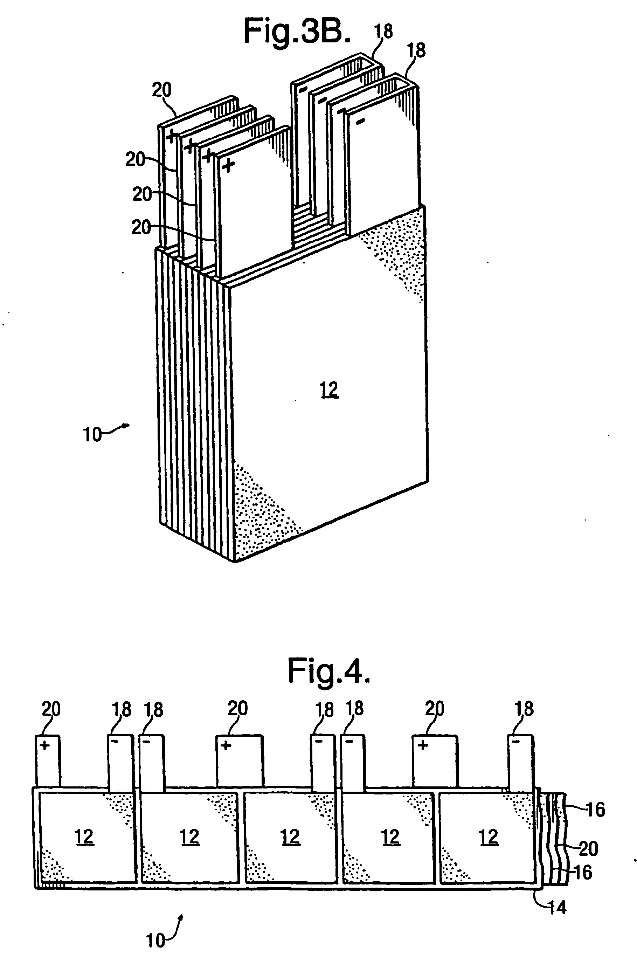

The multicell depicted in Figures 1 and 2 may alternatively be in a zig-zag or folded configuration, with Figure 3A showing a top view and Figure 3B showing a perspective view. In this embodiment, there is a single anode 12 with a negative current collector 18 located throughout the entire geometry, thereby splitting the anode 12 into two layers, as shown. The multiple cathodes 16 are configured so that the parallel surfaces of the separator layer 14 separate the continuously configured anode 12 from two discontinuously configured cathodes 16. The multiple cathodes 16, being discontinuous, thus do not assume the zig-zag configuration. Positive current collectors 20 are located in each of the multiple cathodes 16, thereby splitting each cathode 16 into two layers, as shown.

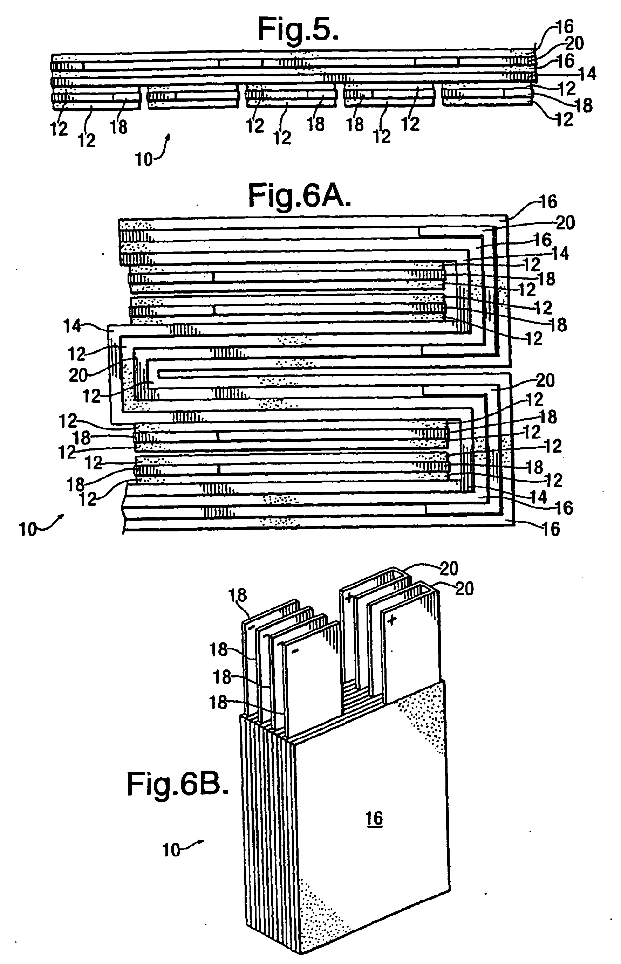

An alternative embodiment of the invention, shown in Figures 4, 5, 6A and 6B, is a multicell 10 design having a single cathode 16 (positive electrode) configured as the exterior of the folded cell 10, a separator 14, and multiple anodes 12 (negative electrodes) configured in the interior or inner surface of the cell 10. That is, a separator 14 separates a single cathode 16 from multiple anodes 12. Figure 4 shows a front view, and Figure 5 shows a top view of such a cell 10. Positive current collectors 20 are positioned in the cathode 16 thereby splitting the cathode 16 into two layers, as shown, and negative current collectors 18 are positioned in each of the multiple anodes 12 thereby splitting each anode 12 into two layers, as shown.

The multicell depicted in Figures 4 and 5 may alternatively be in a zig-zag or folded configuration, with Figure 6A showing a top view and Figure 6B showing a perspective view. In this embodiment, there is a single cathode 16 with a positive current collector 20 located throughout the entire geometry, thereby splitting the cathode 16 into two layers. The multiple anodes 12 are configured so that the parallel surfaces of the separator layer 14 separate the continuously configured cathode 15 from two discontinuously configured anodes 12. The multiple anodes 12, being discontinuous, thus do not assume the zig-zag configuration. Negative current collectors 18 are located in each of the multiple anodes 12, thereby splitting each anode 12 into two layers.

Another embodiment of the invention is a multibicell where the electrode forming the outermost layer of the final cell is configured discontinuously. In a bicell, components are adhered so that a pair of electrodes having the same charge sandwich one electrode having the opposite charge. Any or all of the electrodes may be comprised of a plurality of layers. For example, each anode in the pair of anodes (negative electrodes) may have a negative current collector therebetween, thereby splitting each anode of each pair into two layers. The cathode may have a positive current collector positioned therein, thereby splitting the cathode into two layers. One of the anode pair is located above, and the other of the anode pair is located below, the cathode. The anodes are in a discontinuous configuration. Each anode is separated from the cathode by a separator.

All components (i.e., the two pairs of anode layers sandwiching the cathode layers, current collectors, and separator adhered to form a bicell, and the plurality of bicells) are joined or adhered to form a multibicell. As previously described, adherence may be by laminating using pressure (manual and/or mechanical), heat, or a combination of pressure and heat. Advantageously, a single adherence process, controlled by a single thermal management system, can be used as known to one skilled in the art, for example, for charge voltage and discharge voltage.

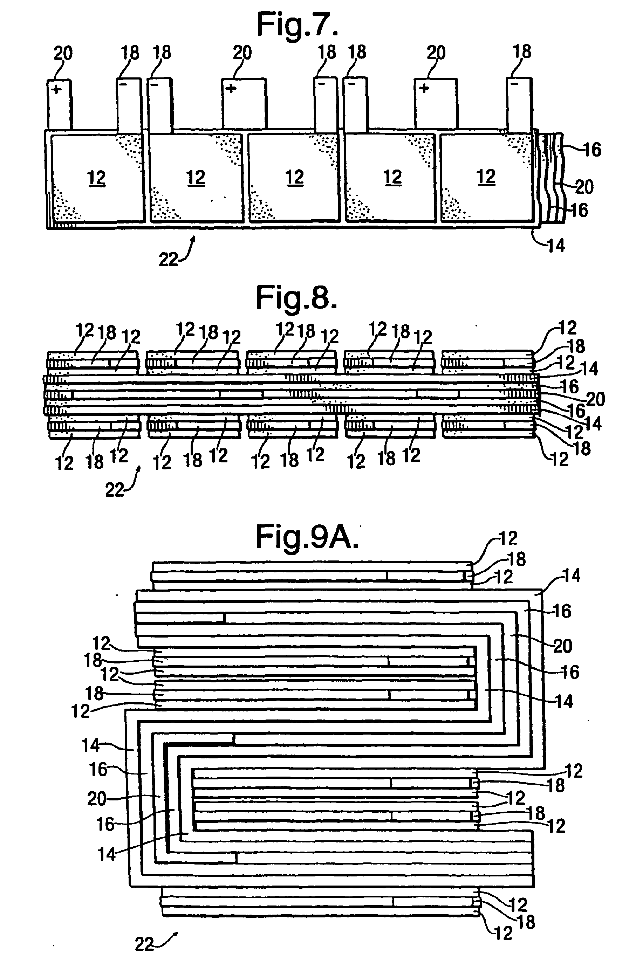

Figures 7, 8, 9A and 9B are multibicell 22 designs having a single cathode 16 (positive electrode) configured in the interior of the folded cell 10, a pair of separators 14, and a pair of discontinuous anodes 12 (negative electrodes) as the outermost electrodes. That is, one separator 14 separates a single cathode 16 on one side from two anodes 12, and another separator 14 separates the single cathode 16 on the other side from two anodes 12. Figure 7 shows a front view, and Figure 8 shows a top view of such a multibicell 22. While Figure 7 illustrates a multibicell 22 having five components of the anode 12 (five bicells), multibicells with two, three, or four components of the anode may be used, as well as multibicells with greater than five components of the anode, as previously described.

A single positive current collector 20 is positioned in the cathode 16, thereby splitting the cathode 16 into a pair of cathode layers 16. A plurality of negative current collectors 18 are positioned in each of the multiple anodes 12, thereby splitting each of the multiple anodes 12 into a pair of anode layers 12.

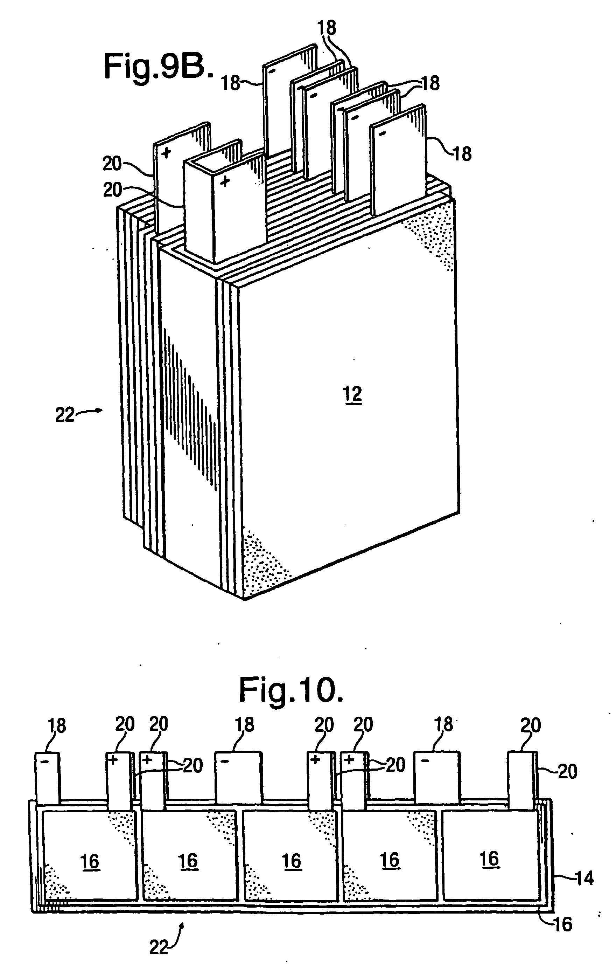

The multibicell 22 depicted in Figures 7 and 8 may be in a zig-zag or folded configuration, with Figure 9A showing a top view and Figure 9B showing a perspective view. In this embodiment, there is a single cathode 16 with a positive current collector 20 located throughout the entire geometry, thereby splitting the cathodes 16 into two cathode layers 16. The multiple anodes 12 are configured so that each of the parallel surfaces of the separator layer 14 separate the continuously configured cathode 16 from two discontinuously configured anodes 12. The multiple anodes 12, being discontinuous, thus do not assume the zig-zag configuration. Negative current collectors 18 are located in each of the multiple anodes 12, thereby splitting each of the multiple anodes 12 into two anode layers 12, and positive current collectors 20 are located throughout the geometry of the cathodes 16, thereby splitting the cathodes 16 into two cathode layers 16.

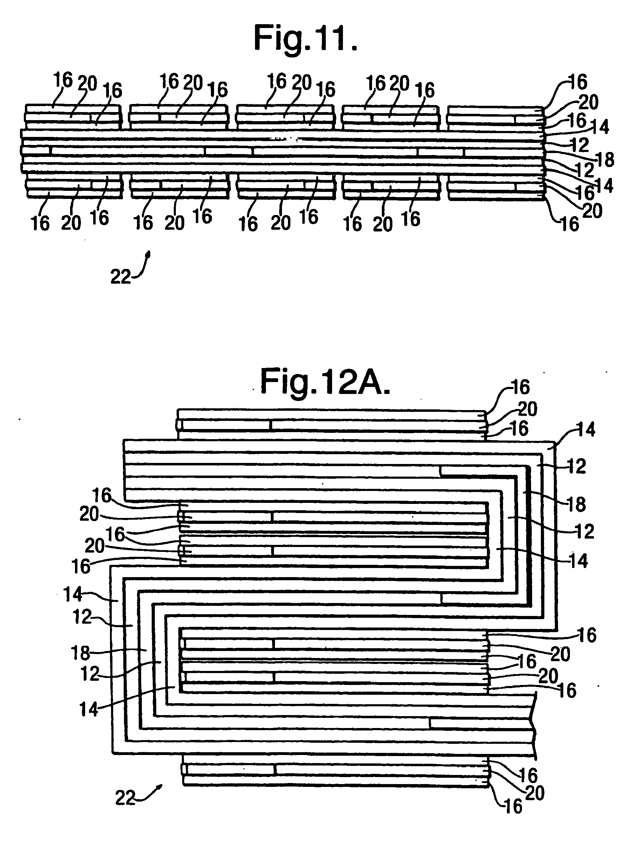

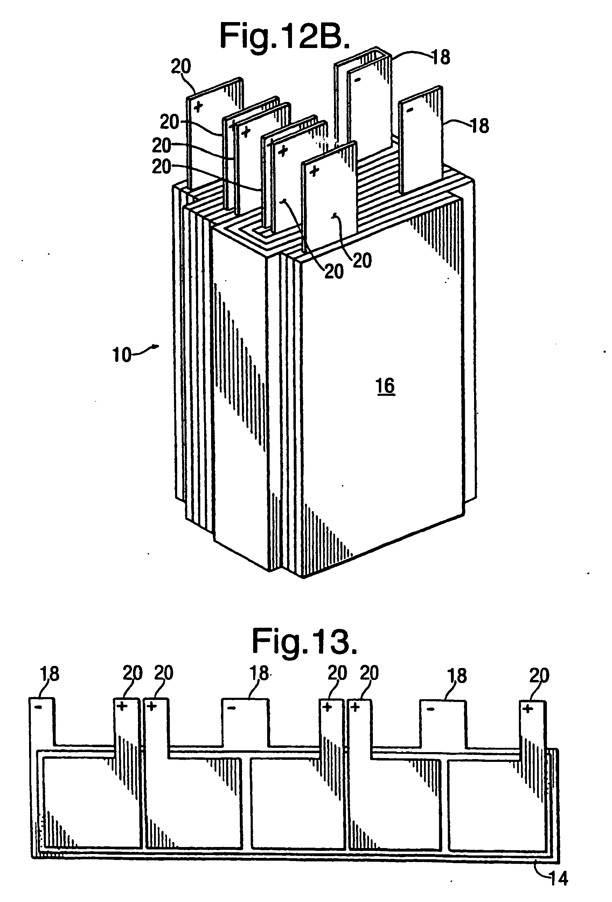

Figures 10, 11, 12A and 12B show bicell 22 configurations which parallel those shown in Figures 7, 8, 9A and 9B, respectively, except for the identity of the electrode. Figures 10 and 11, in front view and top view, respectively, show two discontinuous cathodes 16 (as pairs of two cathode layers 16) sandwiching a single continuous anode 12 (as two anode layers 12). Figures 12A and 12B show the multibicell 22 in a zig-zag or folded configuration. Figure 12A shows a top view, and Figure 12B shows a perspective view.

Any of the above-described cells may include embodiments in which a current collector is on the outermost surface of an electrode. In these embodiments, the current collector does not split the electrode into two layers. For example, an anode may be separated from a cathode by a separator layer, with the negative current collector on the exterior surface of the anode, and/or the positive current collector on the exterior surface of the cathode. Discontinuous and continuous electrode configurations of this embodiment are shown in the following figures.

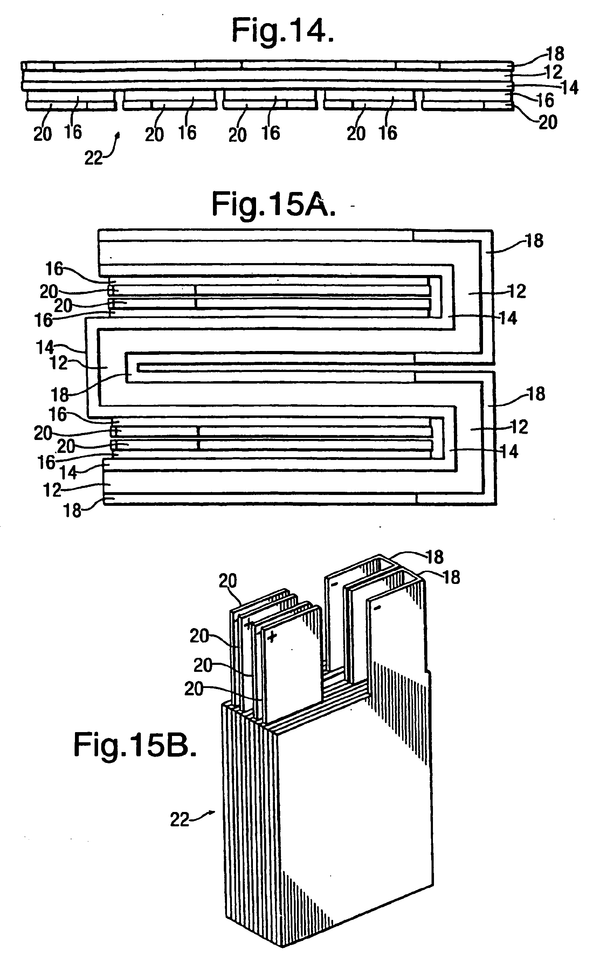

Figures 13, 14, 15A and 15B are multicell designs having current collectors external to a single anode 12 (negative electrode) configured as the outermost electrode in a folded cell 10, a separator 14, and multiple cathodes 16 (positive electrodes) configured as inner electrodes in a folded cell 10. That is, a separator 14 separates a single anode 12 from multiple cathodes 16. Figure 13 shows a front view, and Figure 14 shows a top view of such a cell 10. A single negative current collector 18 is positioned external to the anode 12 throughout the entire geometry. A plurality of positive current collectors 20 are positioned external to each of the multiple cathodes 16 throughout the entire geometry.

The cell 10 depicted in Figures 13 and 14 may be in a zig-zag or folded configuration, with Figure 15A showing a top view and Figure 15B showing a perspective view. In this embodiment, there is a single anode 12 with a negative current collector 18 located external to the anode 12 throughout the entire geometry. The multiple cathodes 16 are configured so that the facing parallel surfaces of the separator layers 14 separate the continuously configured anode 12 from two discontinuously configured cathodes 16, and the two discontinuously configured cathodes 16 with external current collectors 20 are mirror images. The multiple cathodes 16, being discontinuous, thus do not assume the zig-zag configuration.

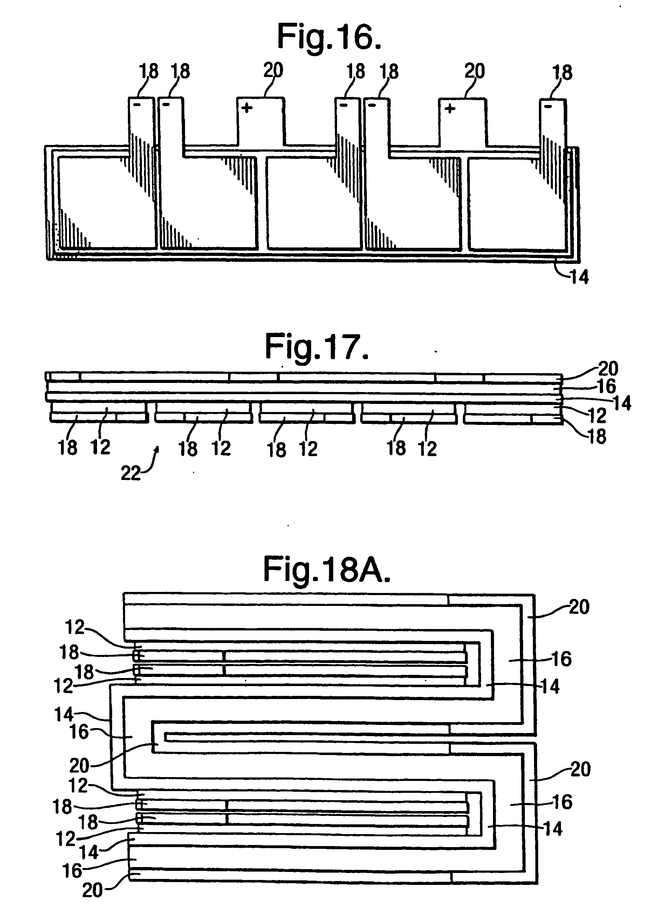

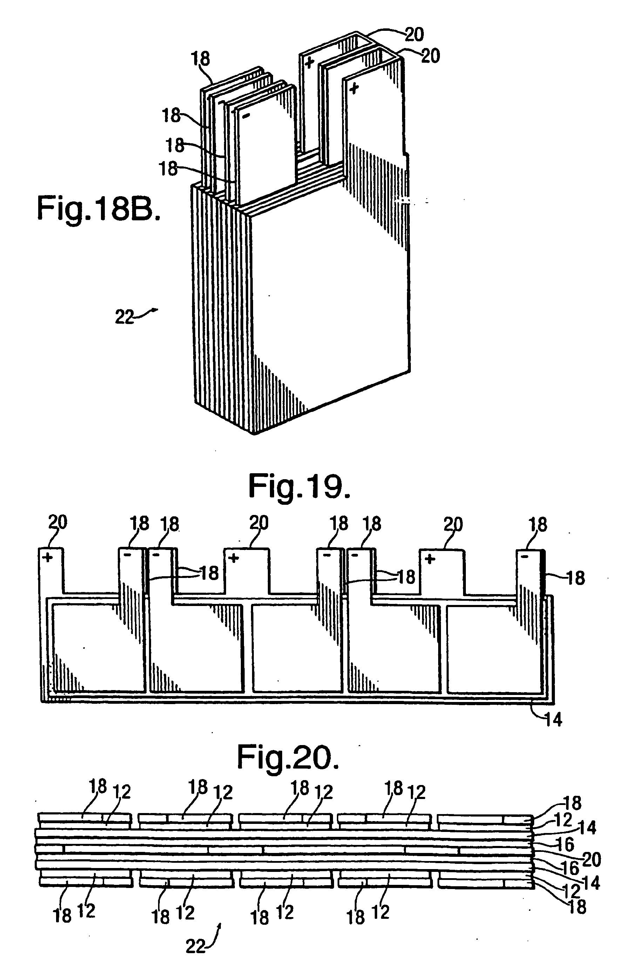

Figures 16, 17, 18A and 18B show multicells having external current collectors which parallel those shown in Figures 13, 14, 15A and 15B, respectively, except for the charge of the electrode. Figure 16 shows a front view, and Figure 17 shows a top view, of a positive current collector 20 located external to a single cathode 16 (positive electrode), a separator 14, and multiple anodes 12 (negative electrodes) with a negative current collector 18 located external to each of the multiple anodes 12. The multiple anodes 12 are configured so that the facing parallel surfaces of the separator layers 14 separate the continuously configured cathode 16 from two discontinuously configured anodes 12, and the two discontinuously configured anodes 12 with external current collectors 18 are mirror images. The multiple anodes 16, being discontinuous, thus do not assume the zig-zag configuration. Figures 18A and 18B show a folded or zig-zag configuration, with Figure 18A showing a top view, and Figure 18B showing a perspective view. As shown in Figures 18A and 18B, the positive current collector 20 is located external to the cathode 16 throughout the entire geometry.

Figures 19, 20, 21A and 21B are multibicell 22 designs. A single cathode 16 (positive electrode) is configured in the interior of the folded cell 10, and the cathode 16 is split into two cathode layers 16 by a positive current collector 20. A pair of separators 14 separates each of the cathode layers 16 from a pair of discontinuous anodes 12 (negative electrodes). That is, one separator 14 separates one cathode layer 16 on one side from two anodes 12, and another separator 14 separates the other cathode layer 16 on the other side from two anodes 12. Each anode 12 has an external current collector 18.

Figure 19 shows a front view, and Figure 20 shows a top view of such a multibicell 22. While Figure 19 illustrates a multibicell 22 having five components of the anode 12 (five bicells), multibicells with two, three, or four components of the anode 12 may be used, as well as multibicells with greater than five components of the anode 12, as previously described.

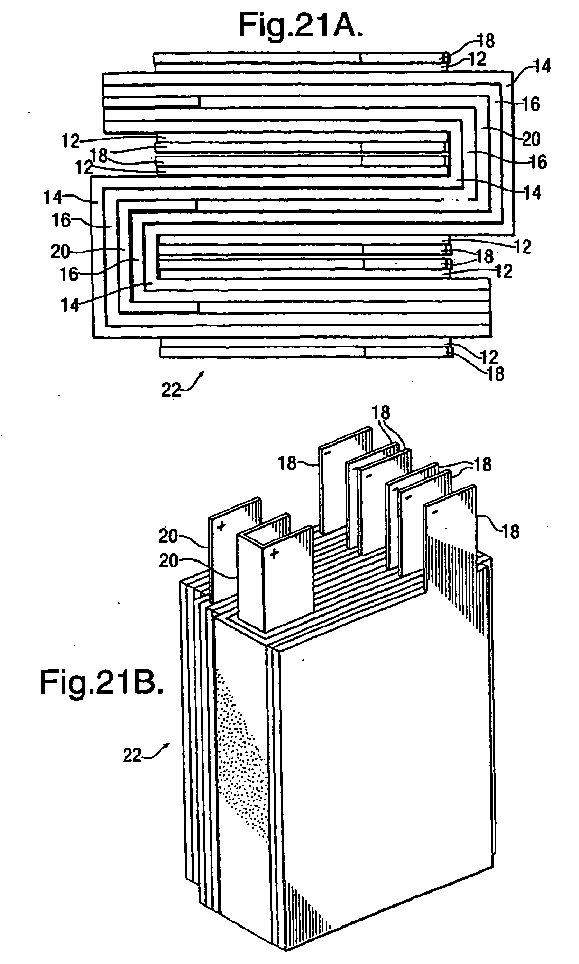

The multibicell 22 depicted in Figures 19 and 20 may be in a zig-zag or folded configuration, with Figure 21A showing a top view and Figure 21B showing a perspective view. In this embodiment, there is a single cathode 16 with a positive current collector 20 located internal to the cathode 16 throughout the entire geometry, thereby splitting the cathode 16 into two cathode layers 16. The multiple anodes 12 are configured so that each of the parallel surfaces of the separator layer 14 separate the continuously configured cathode layers 16 from two discontinuously configured anodes 12. The anodes 12, being discontinuous, thus do not assume the zig-zag configuration. Negative current collectors 18 are located external to each of the anodes 12, and form the outermost surface of the folded cell, as shown in Figure 21B. The multiple anodes 12 are configured so that each of the parallel surfaces of the separator layer 14 separate the continuously configured cathode 16 from two discontinuously configured anodes 12. The multiple anodes 12, being discontinuous, thus do not assume the zig-zag configuration.

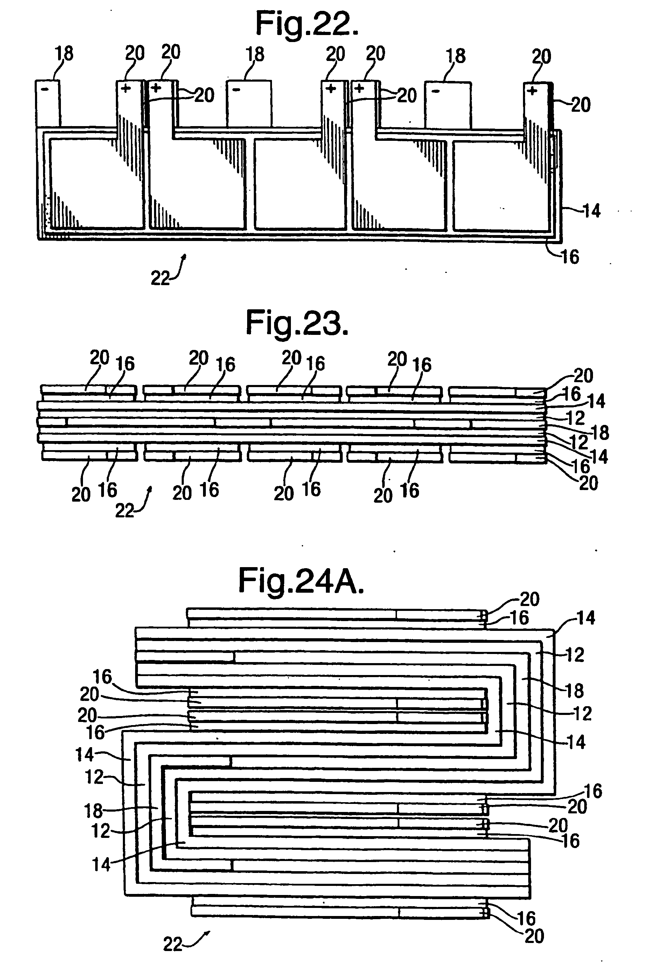

Figures 22, 23, 24A and 24B show multibicell 22 configurations which parallel those shown in Figures 19, 20, 21A and 21B, respectively, except for the charge of the electrode. A single anode 12 (negative electrode) is configured in the interior of the folded cell 10, and the anode 12 is split into two anode layers 12 by a negative current collector 18. A pair of separators 14 separates each of the anode layers 12 from a pair of discontinuous cathodes 16 (positive electrodes). That is, one separator 14 separates one anode layer 12 on one side from two cathodes 16, and another separator 14 separates the other anode layer 12 on the other side from two cathodes 16. Each cathode 16 has an external current collector 20.

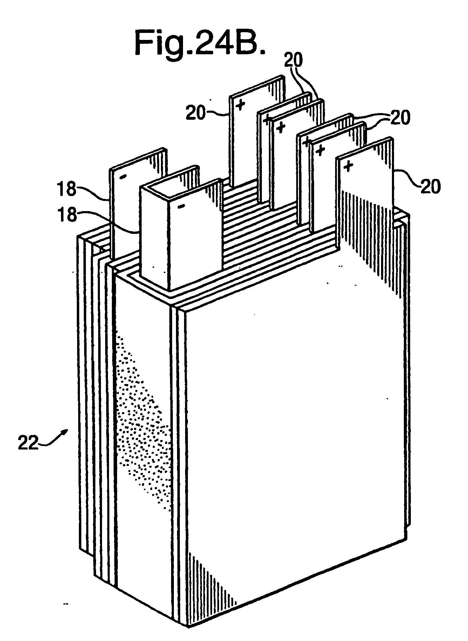

The multibicell 22 depicted in Figures 22 and 23 may be in a zig-zag or folded configuration, with Figure 24A showing a top view and Figure 24B showing a perspective view. In this embodiment, there is a single anode 12 with a negative current collector 18 located internal to the anode 12 throughout the entire geometry, thereby splitting the anode 12 into two anode layers 12. The multiple cathodes 16 are configured so that each of the parallel surfaces of the separator layer 14 separate the continuously configured anode layers 12 from two discontinuously configured cathodes 16. The cathodes 16, being discontinuous, thus do not assume the zig-zag configuration. Positive current collectors 20 are located external to each of the cathodes 16, and form the outermost surface of the folded cell, as shown in Figure 24B. With a cell having at least one continuous electrode and two discontinuous electrodes, where either the anode is the continuous electrode and the cathodes are the discontinuous electrodes, or the cathode is the continuous electrode and the anodes are the discontinuous electrodes, any of the following embodiments of a cell are possible: the cell may be a multicell (Figures 1-6; Figures 13-18) or a multibicell (Figures 7-12; Figures 19-24). In either the multicell or multibicell embodiments, the cell may have one anode and one cathode with a current collector between the anode and the cathode, or the cell may have two anodes separated by a negative current collector between the anodes, thereby splitting the anode into two anode layers, and/or the cell may have two cathodes separated by a positive current collector between the cathodes, thereby splitting the cathode into two cathode layers. In a multibicell embodiment, both negative and positive current collectors may be on the outer surface of the respective anode and cathode (Figures 13, 14, and 15). In a multibicell embodiment, negative current collectors may be on the outer surface of the anodes and positive current collectors may be between a single cathode, thus splitting the cathode into two layers the two cathodes (Figures 19, 20, and 21), or positive current collectors may be on the outer surface of the cathodes, and negative current collectors may be between a single anode, thus splitting the anode into two anode layers (Figures 22, 23, and 24).

While the present invention has been illustrated by the description of an embodiment thereof, and while the embodiment has been described in considerable detail, it is not intended to restrict or in any way limit the scope of the appended claims to such detail. Additional advantages and modifications will readily appear to those skilled in the art. The invention in its broader aspects is therefore not limited to the specific details, representative apparatus and method and illustrative examples shown and described. Accordingly, departures may be made from such details without departing from the scope or spirit of Applicant=s general inventive concept.

## Claims

1. A lithium polymer battery comprising at least one cell 10, said cell 10 comprising a first electrode configured continuously, at least one second electrode of opposite charge from the first electrode configured discontinuously, and a separator 14 between the first and second electrodes.

2. The battery of claim 1 wherein the cell 10 is selected from the group consisting of a multicell 10 and a multibicell 22.

3. The battery of claim 1 wherein the cell 10 has a configuration selected from the group consisting of
at least one anode 12 and at least one cathode 16,
at least one anode 12 having a current collector positioned therein and at least one cathode,
at least one cathode having a current collector positioned therein and at least one anode 12, and
at least two anodes 12 and at least two cathodes 16, said anode 12 and cathodes 16 each having a current collector positioned therein.

4. The battery of claim 3 wherein said at least one anode 12 has an external current collector.

5. The battery of claim 3 wherein said at least one cathode has an external current collector.

6. The battery of claim 1 wherein the cell 10 is a multibicell 22 comprising an outer pair of two anode 12 layers with a negative current collector 18 between the anode 12 layers and an inner pair of two anode 12 layers with a negative current collector 18 between the anode 12 layers, and a cathode 16 comprising two cathode 16 layers with a positive current collector 20 between the cathode 16 layers, said cathode 16 between said outer pair of anodes 12 and said inner pair of anodes, said multibicell 22 further comprising a separator 14 between said outer pair of anodes 12 and said inner pair of anodes 12 and said cathode 16.

7. The battery of claim 1 wherein the cell 10 is a multibicell 22 comprising an outer pair of two cathode 16 layers with a positive current collector 20 between the cathode 16 layers and an inner pair of two cathode 16 layers with a positive current collector 20 between the cathode 16 layers, and an anode 12 comprising two anode 12 layers with a negative current collector 18 between the anode 12 layers, said anode 12 between said outside pair of cathodes 16 and said inner pair of cathodes 16, said multibicell 22 further comprising a separator 14 between said outer pair of cathodes 16 and said inner pair of cathodes 16 and said anode 12.

8. The battery of claim 1 further comprising a current collector for at least one of the electrodes.

9. The battery of claim 8 wherein the current collector is aluminum foil, grid, or mesh for a positive electrode, and copper foil, grid, or mesh for a negative electrode.

10. The battery of claim 8 wherein the current collector is on an outer surface of at least one electrode.

11. The battery of claim 8 wherein the current collector is on an inner surface of at least one electrode.

12. The battery of claim 8 wherein the current collector is positioned in at least one electrode to split the electrode into at least two layers.

13. A lithium polymer battery comprising at least one cell 10, said cell 10 comprising a first electrode, at least one second electrode of opposite charge from the first electrode, and a separator 14 between the first and second electrodes, the battery in a corrugated configuration with the first electrode continuous and the second electrode discontinuous.

14. The battery of claim 13 wherein the cell 10 is selected from the group consisting of a multicell 10 and a multibicell 22.

15. The battery of claim 13 wherein the cell 10 is selected from the group consisting of
at least one anode 12 and at least one cathode 16,
at least one anode 12 having a current collector positioned therein and at least one cathode 16,
at least one cathode 16 having a current collector positioned therein and at least one anode 12, and
at least two anodes and at least two cathodes 16, said anodes and cathodes 16 each having a current collector positioned therein.

16. The battery of claim 13 wherein the cell 10 is a multibicell 22 comprising an outer pair of two anode 12 layers with a negative current collector 18 between the anode 12 layers and an inner pair of two anode 12 layers with a negative current collector 18 between the anode 12 layers, and a cathode 16 comprising two cathode 16 layers with a positive current collector 20 between the cathode 16 layers, said cathode 16 between said outer pair of anodes 12 and said inner pair of anodes 12, said multibicell 22 further comprising a separator 14 between said outer pair of anodes 12 and said inner pair of anodes 12 and said cathode 16.

17. The battery of claim 13 wherein the cell 10 is a bicell 22 comprising an outer pair of two cathode 16 layers with a positive current collector 20 between the cathode 16 layers and an inner pair of cathode 16 layers with a positive current collector 20 between the cathode 16 layers, and an anode 12 comprising two anode 12 layers with a negative current collector 18 between the anode 12 layers, said anode 12 between said outer pair of cathodes 16 and said inner pair of cathodes 16, said multibicell 22 further comprising a separator 14 between said outer pair of cathodes 16 and said inner pair of cathodes 16 and said anode 12.

18. The battery of claim 13 further comprising a current collector for at least one of the electrodes.

19. The battery of claim 18 wherein the current collector is aluminum foil, grid, or mesh for a positive electrode, and copper foil, grid, or mesh for a negative electrode.

20. The battery of claim 18 wherein the current collector is on an outer surface of the electrode and is configured continuously.

21. The battery of claim 18 wherein the current collector is on an inner surface of the electrode and is configured discontinuously.

22. A method for preparing a lithium polymer cell 10 comprising
(a) providing a continuous electrode, at least two discontinuous electrodes, and a separator 14 between said continuous electrode and said discontinuous electrodes, and
(b) adhering the separator 14 to the continuous and discontinuous electrodes to form a multicell 10.

23. The method of claim 22 further comprising
(c) configuring the multicell10 with the discontinuous electrodes in the interior of the multicell 10 and the continuous electrode at the exterior of the multicell 10.

24. The method of claim 22 further comprising repeating steps (a) and (b) to form a plurality of multicells 22 and adhering the plurality of cells 10 to form a battery.

25. The method of claim 24 further comprising
(c) configuring the battery with the discontinuous electrodes in the interior of the battery and the continuous electrode at the exterior of the battery.

26. The method of claim 22 wherein adhering the plurality of cells 10 is by a single process.

27. The method of claim 26 wherein the adhering process is controlled by a thermal management system.

28. The method of claim 23 wherein configuring is by a method selected from the group consisting of rolling, folding, bending, and combinations thereof.

29. The method of claim 25 wherein configuring is by a method selected from the group consisting of rolling folding, bending, and combinations thereof.

## Patentansprüche

1. Eine Lithium-Polymer-Batterie, umfassend mindestens eine Zelle 10, wobei die Zelle 10 eine erste Elektrode, die kontinuierlich konfiguriert ist, mindestens eine zweite Elektrode von gegenteiliger Ladung zur ersten Elektrode, die kontinuierlich konfiguriert ist, und ein Trennelement 14 zwischen der ersten und der zweiten Elektrode umfasst.

2. Batterie nach Anspruch 1, wobei die Zelle 10 ausgewählt ist aus der Gruppe bestehend aus einer Multizelle 10 und einer Multibizelle 22.

3. Batterie nach Anspruch 1, wobei die Zelle 10 eine Konfiguration aufweist, die ausgewählt ist aus der Gruppe bestehend aus
mindestens einer Anode 12 und mindestens einer Kathode 16,
mindestens einer Anode 12 mit einem Stromabnehmer, der darin positioniert ist, und mindestens einer Kathode,
mindestens einer Kathode mit einem Stromabnehmer, der darin positioniert ist, und mindestens einer Anode 12, und
mindestens zwei Anoden 12 und mindestens zwei Kathoden 16, wobei die Anoden 12 und die Kathoden 16 jeweils einen Stromabnehmer aufweisen, der darin positioniert ist.

4. Batterie nach Anspruch 3, wobei die mindestens eine Anode 12 einen externen Stromabnehmer aufweist.

5. Batterie nach Anspruch 3, wobei die mindestens eine Kathode einen externen Stromabnehmer aufweist.

6. Batterie nach Anspruch 1, wobei die Zelle 10 eine Multibizelle 22 ist, umfassend ein äußeres Paar von zwei Anodenschichten 12 mit einem negativen Stromabnehmer 18 zwischen den Anodenschichten 12 und ein inneres Paar von zwei Anodenschichten 12 mit einem negativen Stromabnehmer 18 zwischen den Anodenschichten 12 und eine Kathode 16, umfassend zwei Kathodenschichten 16 mit einem positiven Stromabnehmer 20 zwischen den Kathodenschichten 16, wobei die Kathode 16 zwischen dem äußeren Paar von Anoden 12 und dem inneren Paar von Anoden ist, wobei die Multibizelle 22 ferner ein Trennelement 14 zwischen dem äußeren Paar von Anoden 12 und dem inneren Paar von Anoden 12 und der Kathode 16 umfasst.

7. Batterie nach Anspruch 1, wobei die Zelle 10 eine Multibizelle 22 ist, umfassend ein äußeres Paar von zwei Kathodenschichten 16 mit einem positiven Stromabnehmer 20 zwischen den Kathodenschichten 16 und ein inneres Paar von zwei Kathodenschichten 16 mit einem positiven Stromabnehmer 20 zwischen den Kathodenschichten 16 und eine Anode 12, umfassend zwei Anodenschichten 12 mit einem negativen Stromabnehmer 18 zwischen den Anodenschichten 12, wobei die Anode 12 zwischen dem äußeren Paar von Kathoden 16 und dem inneren Paar von Kathoden 16 ist, wobei die Multibizelle 22 ferner ein Trennelement 14 zwischen dem äußeren Paar von Kathoden 16 und dem inneren Paar von Kathoden 16 und der Anode 12 umfasst.

8. Batterie nach Anspruch 1, ferner umfassend einen Stromabnehmer für mindestens eine der Elektroden.

9. Batterie nach Anspruch 8, wobei der Stromabnehmer eine Aluminiumfolie, ein Aluminiumgitter oder ein Aluminiumnetz für eine positive Elektrode und eine Kupferfolie, ein Kupfergitter oder ein Kupfernetz für eine negative Elektrode ist.

10. Batterie nach Anspruch 8, wobei der Stromabnehmer sich auf einer äußeren Fläche von mindestens einer Elektrode befindet.

11. Batterie nach Anspruch 8, wobei der Stromabnehmer sich auf einer inneren Fläche von mindestens einer Elektrode befindet.

12. Batterie nach Anspruch 8, wobei der Stromabnehmer in mindestens einer Elektrode positioniert ist, um die Elektrode in mindestens zwei Schichten aufzuteilen.

13. Eine Lithium-Polymer-Batterie, umfassend mindestens eine Zelle 10, wobei die Zelle 10 eine erste Elektrode, mindestens eine zweite Elektrode von gegenteiliger Ladung zur ersten Elektrode und ein Trennelement 14 zwischen der ersten und der zweiten Elektrode umfasst, wobei die Batterie eine wellige Konfiguration aufweist und die erste Elektrode kontinuierlich ist und die zweite Elektrode diskontinuierlich ist.

14. Batterie nach Anspruch 13, wobei die Zelle 10 ausgewählt ist aus der Gruppe bestehend aus einer Multizelle 10 und einer Multibizelle 22.

15. Batterie nach Anspruch 13, wobei die Zelle 10 ausgewählt ist aus der Gruppe bestehend aus
mindestens einer Anode 12 und mindestens einer Kathode 16,
mindestens einer Anode 12 mit einem Stromabnehmer, der darin positioniert ist, und mindestens einer Kathode 16,
mindestens einer Kathode 16 mit einem Stromabnehmer, der darin positioniert ist, und mindestens einer Anode 12, und
mindestens zwei Anoden und mindestens zwei Kathoden 16, wobei die Anoden und Kathoden 16 jeweils einen Stromabnehmer aufweisen, der darin positioniert ist.

16. Batterie nach Anspruch 13, wobei die Zelle 10 eine Multibizelle 22 ist, umfassend ein äußeres Paar von zwei Anodenschichten 12 mit einem negativen Stromabnehmer 18 zwischen den Anodenschichten 12 und ein inneres Paar von zwei Anodenschichten 12 mit einem negativen Stromabnehmer 18 zwischen den Anodenschichten 12 und eine Kathode 16, umfassend zwei Kathodenschichten 16 mit einem positiven Stromabnehmer 20 zwischen den Kathodenschichten 16, wobei die Kathode 16 zwischen dem äußeren Paar von Anoden 12 und dem inneren Paar von Anoden 12 ist, wobei die Multibizelle 22 ferner ein Trennelement 14 zwischen dem äußeren Paar von Anoden 12 und dem inneren Paar von Anoden 12 und der Kathode 16 umfasst.

17. Batterie nach Anspruch 13, wobei die Zelle 10 eine Bizelle 22 ist, umfassend ein äußeres Paar von zwei Kathodenschichten 16 mit einem positiven Stromabnehmer 20 zwischen den Kathodenschichten 16 und ein inneres Paar von Kathodenschichten 16 mit einem positiven Stromabnehmer 20 zwischen den Kathodenschichten 16 und eine Anode 12, umfassend zwei Anodenschichten 12 mit einem negativen Stromabnehmer 18 zwischen den Anodenschichten 12, wobei die Anode 12 zwischen dem äußeren Paar von Kathoden 16 und dem inneren Paar von Kathoden 16 ist, wobei die Multibizelle 22 ferner ein Trennelement 14 zwischen dem äußeren Paar von Kathoden 16 und dem inneren Paar von Kathoden 16 und der Anode 12 umfasst.

18. Batterie nach Anspruch 13, ferner umfassend einen Stromabnehmer für mindestens eine der Elektroden.

19. Batterie nach Anspruch 18, wobei der Stromabnehmer eine Aluminiumfolie, ein Aluminiumgitter oder ein Aluminiumnetz für eine positive Elektrode und eine Kupferfolie, ein Kupfergitter oder ein Kupfernetz für eine negative Elektrode ist.

20. Batterie nach Anspruch 18, wobei der Stromabnehmer sich auf einer äußeren Fläche der Elektrode befindet und kontinuierlich konfiguriert ist.

21. Batterie nach Anspruch 18, wobei der Stromabnehmer sich auf einer inneren Fläche der Elektrode befindet und diskontinuierlich konfiguriert ist.

22. Ein Verfahren zur Herstellung einer Lithium-Polymer-Zelle 10, umfassend
(a) Bereitstellen einer kontinuierlichen Elektrode, mindestens zwei diskontinuierlicher Elektroden und eines Trennelements 14 zwischen der kontinuierlichen Elektrode und der diskontinuierlichen Elektrode, und
(b) Binden des Trennelements 14 an die kontinuierlichen und diskontinuierlichen Elektroden, um eine Multizelle 10 zu bilden.

23. Verfahren nach Anspruch 22, ferner umfassend
(c) Konfigurieren der Multizelle 10 mit den diskontinuierlichen Elektroden im Inneren der Multizelle 10 und der kontinuierlichen Elektrode außerhalb der Multizelle 10.

24. Verfahren nach Anspruch 22, ferner umfassend das Wiederholen von Schritten (a) und (b), um eine Vielzahl von Multizellen 22 zu bilden, und Binden der Vielzahl von Zellen 10, um eine Batterie zu bilden.

25. Verfahren nach Anspruch 24, ferner umfassend
(c) Konfigurieren der Batterie mit den diskontinuierlichen Elektroden im Inneren der Batterie und der kontinuierlichen Elektrode außerhalb der Batterie.

26. Verfahren nach Anspruch 22, wobei das Binden der Vielzahl von Zellen 10 in einem einzelnen Vorgang erfolgt.

27. Verfahren nach Anspruch 26, wobei der Bindevorgang von einem thermischen Managementsystem gesteuert wird.

28. Verfahren nach Anspruch 23, wobei das Konfigurieren mittels eines Verfahrens erfolgt, das ausgewählt ist aus der Gruppe bestehend aus Rollen, Falten, Biegen und Kombinationen davon.

29. Verfahren nach Anspruch 25, wobei das Konfigurieren mittels eines Verfahrens erfolgt, das ausgewählt ist aus der Gruppe bestehend aus Rollen, Falten, Biegen und Kombinationen davon.

## Revendications

1. Une pile au lithium-polymère comportant au moins une cellule 10, ladite cellule 10 comportant une première électrode configurée en continu, au moins une deuxième électrode de charge opposée à la première électrode configurée en discontinu, et un séparateur 14 entre la première et la deuxième électrode.

2. La pile de la revendication 1 où la cellule 10 est sélectionnée dans le groupe composé d'une cellule multiple 10 et d'une bicellule multiple 22.

3. La pile de la revendication 1 où la cellule 10 a une configuration sélectionnée dans le groupe composé de
au moins une anode 12 et au moins une cathode 16,
au moins une anode 12 ayant un collecteur de courant positionné à l'intérieur d'elle et au moins une cathode,
au moins une cathode ayant un collecteur de courant positionné à l'intérieur d'elle et au moins une anode 12, et
au moins deux anodes 12 et au moins deux cathodes 16, lesdites anodes 12 et cathodes 16 ayant chacune un collecteur de courant positionné à l'intérieur d'elles.

4. La pile de la revendication 3 où ladite au moins une anode 12 a un collecteur de courant externe.

5. La pile de la revendication 3 où ladite au moins une cathode a un collecteur de courant externe.

6. La pile de la revendication 1 où la cellule 10 est une bicellule multiple 22 comportant une paire extérieure de deux couches anodiques 12 avec un collecteur de courant négatif 18 entre les couches anodiques 12 et une paire intérieure de deux couches anodiques 12 avec un collecteur de courant négatif 18 entre les couches anodiques 12, et une cathode 16 comportant deux couches cathodiques 16 avec un collecteur de courant positif 20 entre les couches cathodiques 16, ladite cathode 16 entre ladite paire extérieure d'anodes 12 et ladite paire intérieure d'anodes, ladite bicellule multiple 22 comportant de plus un séparateur 14 entre ladite paire extérieure d'anodes 12 et ladite paire intérieure d'anodes 12 et ladite cathode 16.

7. La pile de la revendication 1 où la cellule 10 est une bicellule multiple 22 comportant une paire extérieure de deux couches cathodiques 16 avec un collecteur de courant positif 20 entre les couches cathodiques 16 et une paire intérieure de deux couches cathodiques 16 avec un collecteur de courant positif 20 entre les couches cathodiques 16, et une anode 12 comportant deux couches anodiques 12 avec un collecteur de courant négatif 18 entre les couches anodiques 12, ladite anode 12 entre ladite paire extérieure de cathodes 16 et ladite paire intérieure de cathodes 16, ladite bicellule multiple 22 comportant de plus un séparateur 14 entre ladite paire extérieure de cathodes 16 et ladite paire intérieure de cathodes 16 et ladite anode 12.

8. La pile de la revendication 1 comportant de plus un collecteur de courant pour au moins une des électrodes.

9. La pile de la revendication 8 où le collecteur de courant est une maille, une grille ou une feuille d'aluminium pour une électrode positive, et une maille, une grille ou une feuille de cuivre pour une électrode négative.

10. La pile de la revendication 8 où le collecteur de courant est sur une surface extérieure d'au moins une électrode.

11. La pile de la revendication 8 où le collecteur de courant est sur une surface intérieure d'au moins une électrode.

12. La pile de la revendication 8 où le collecteur de courant est positionné dans au moins une électrode pour diviser l'électrode en au moins deux couches.

13. Une pile au lithium-polymère comportant au moins une cellule 10, ladite cellule 10 comportant une première électrode, au moins une deuxième électrode de charge opposée à la première électrode, et un séparateur 14 entre la première et la deuxième électrode, la pile dans une configuration ondulée avec la première électrode continue et la deuxième électrode discontinue.

14. La pile de la revendication 13 où la cellule 10 est sélectionnée dans le groupe composé d'une cellule multiple 10 et d'une bicellule multiple 22.

15. La pile de la revendication 13 où la cellule 10 est sélectionnée dans le groupe composé de
au moins une anode 12 et au moins une cathode 16,
au moins une anode 12 ayant un collecteur de courant positionné à l'intérieur d'elle et au moins une cathode 16,
au moins une cathode 16 ayant un collecteur de courant positionné à l'intérieur d'elle et au moins une anode 12, et
au moins deux anodes 12 et au moins deux cathodes 16, lesdites anodes et cathodes 16 ayant chacune un collecteur de courant positionné à l'intérieur d'elles.

16. La pile de la revendication 13 où la cellule 10 est une bicellule multiple 22 comportant une paire extérieure de deux couches anodiques 12 avec un collecteur de courant négatif 18 entre les couches anodiques 12 et une paire intérieure de deux couches anodiques 12 avec un collecteur de courant négatif 18 entre les couches anodiques 12, et une cathode 16 comportant deux couches cathodiques 16 avec un collecteur de courant positif 20 entre les couches cathodiques 16, ladite cathode 16 entre ladite paire extérieure d'anodes 12 et ladite paire intérieure d'anodes 12, ladite bicellule multiple 22 comportant de plus un séparateur 14 entre ladite paire extérieure d'anodes 12 et ladite paire intérieure d'anodes 12 et ladite cathode 16.

17. La pile de la revendication 13 où la cellule 10 est une bicellule 22 comportant une paire extérieure de deux couches cathodiques 16 avec un collecteur de courant positif 20 entre les couches cathodiques 16 et une paire intérieure de couches cathodiques 16 avec un collecteur de courant positif 20 entre les couches cathodiques 16, et une anode 12 comportant deux couches anodiques 12 avec un collecteur de courant négatif 18 entre les couches anodiques 12, ladite anode 12 entre ladite paire extérieure de cathodes 16 et ladite paire intérieure de cathodes 16, ladite bicellule multiple 22 comportant de plus un séparateur 14 entre ladite paire extérieure de cathodes 16 et ladite paire intérieure de cathodes 16 et ladite anode 12.

18. La pile de la revendication 13 comportant de plus un collecteur de courant pour au moins une des électrodes.

19. La pile de la revendication 18 où le collecteur de courant est une maille, une grille ou une feuille d'aluminium pour une électrode positive, et une maille, une grille ou une feuille de cuivre pour une électrode négative.

20. La pile de la revendication 18 où le collecteur de courant est sur une surface extérieure de l'électrode et est configuré en continu.

21. La pile de la revendication 18 où le collecteur de courant est sur une surface intérieure de l'électrode et est configuré en discontinu.

22. Un procédé pour préparer une cellule au lithium-polymère 10 comportant
(a) fournir une électrode continue, au moins deux électrodes discontinues, et un séparateur 14 entre ladite électrode continue et lesdites électrodes discontinues, et
(b) faire adhérer le séparateur 14 aux électrodes continue et discontinues pour former une cellule multiple 10.

23. Le procédé de la revendication 22 comportant
(c) configurer la cellule multiple 10 avec les électrodes discontinues à l'intérieur de la cellule multiple 10 et l'électrode continue à l'extérieur de la cellule multiple 10.

24. Le procédé de la revendication 22 comportant de plus répéter les étapes (a) et (b) pour former une pluralité de cellules multiples 22 et faire adhérer la pluralité de cellules 10 pour former une pile.

25. Le procédé de la revendication 24 comportant de plus
(c) configurer la pile avec les électrodes discontinues à l'intérieur de la pile et l'électrode continue à l'extérieur de la pile.

26. Le procédé de la revendication 22 où l'adhésion de la pluralité de cellules 10 se fait par un processus unique.

27. Le procédé de la revendication 26 où le processus d'adhésion est contrôlé par un système de gestion thermique.

28. Le procédé de la revendication 23 où la configuration se fait par un procédé sélectionné dans le groupe composé de rouler, plier, courber, et des combinaisons de ces derniers.

29. Le procédé de la revendication 25 où la configuration se fait par un procédé sélectionné dans le groupe composé de rouler, plier, courber, et des combinaisons de ces derniers.
